# EUROPÄISCHE PATENTSCHRIFT

(11) **EP 1 829 656 B1**
(45) Veröffentlichungstag und Bekanntmachung des Hinweises auf die Patenterteilung: **29.09.2010**
(21) Anmeldenummer: 07002687.7
(22) Anmeldetag: 08.02.2007
(51) Int. Cl.: B27B 5/24, B23D 45/06

(54) **Holzbearbeitungsmaschine**
Wood working machine
Machine de traitement du bois

(30) Priorität: 03.03.2006 DE 102006010433
(43) Veröffentlichungstag der Anmeldung: 05.09.2007
(73) Patentinhaber: Scheppach Fabrikation von Holzbearbeitungsmaschinen GmbH, 89335 Ichenhausen (DE)
(72) Erfinder: Bauer, Reinhold, 86476 Neuburg (DE)
(74) Vertreter: Munk, Ludwig

(56) Entgegenhaltungen:
- EP-A1- 1 110 650
- EP-A2- 0 235 683
- DE-U1-202005 014 115
- US-A- 1 797 848
- US-A- 2 678 071
- US-A- 2 844 173
- US-A1- 2005 188 807

## Beschreibung

Die Erfindung betrifft eine Holzbearbeitungsmaschine, insbesondere eine Kreissäge, mit einem Maschinengestell, auf dem eine Tischplatte aufgenommen ist, und mit einem unterhalb der Tischplatte angeordneten, um eine mit der Oberseite der Tischplatte koplanare Schwenkachse schwenkbaren Schwenkrahmen, auf dem eine höhenverstellbare Werkzeugkonsole aufgenommen ist, die wenigstens ein einen zugeordneten Schlitz der Tischplatte durchgreifendes Bearbeitungswerkzeug trägt, das auf eine Welle aufspannbar ist, die mittels eines an der Werkzeugkonsole angebrachten Motors antreibbar ist.

Eine Anordnung dieser Art ist beispielsweise aus der EP 0 235 683 B1 bekannt. Bei dieser bekannten Anordnung ist der Schwenkrahmen im Bereich seines vorderen und hinteren Endes mit Gleitsteinen versehen, die paarweise in einen jeweils zugeordneten Bogenschlitz eines vorderen und hinteren, in das Maschinengestell integrierten, stationären Lagerschilds eingreifen. Die Lagerschilde sind an ihrem unteren, zum Bogenschlitz konzentrischen Rand mit einer Verzahnung versehen, mit der ein mittels eines Handrads antreibbares Ritzel im Eingriff ist. Die den Ritzeln zugeordnete Ritzelwelle, auf der das Handrad aufgenommen ist, ist auf dem Schwenkrahmen gelagert und aus dem Maschinengestell herausgeführt, das hierfür einen zum Bogenschlitz der stationären Lagerschilde konzentrischen Durchgriffsschlitz benötigt.

Nachteilig hierbei ist, dass die Ritzelwelle jede Schwenkbewegung des Schwenkrahmens mitmacht, so dass das auf der Ritzelwelle aufgenommene Handrad bei jeder Schwenkbewegung des Schwenkrahmens seine Position ändert. Dies ist aus bedienungstechnischen Gründen unerwünscht. Hinzu kommt, dass der von der Ritzelwelle durchgriffene Durchgriffsschlitz des Maschinengestells ein Sicherheitsrisiko darstellen kann und dementsprechend abgedeckt werden muss. Die direkte Übertragung der Drehbewegung des Handrads auf den Schwenkrahmen ist auch hinsichtlich der erzielbaren Genauigkeit ungünstig. Außerdem ist bei der bekannten Anordnung der im Maschinengestell aufgehängte Schwenkrahmen von der Tischplatte getrennt, was die Montage erschwert.

Hiervon ausgehend ist es daher die Aufgabe der vorliegenden Erfindung, eine Anordnung eingangs erwähnter Art mit einfachen und kostengünstigen Mitteln so zu verbessern, dass nicht nur eine hohe Bedienungsfreundlichkeit, Sicherheit und Genauigkeit erreicht wird, sondern auch ein sinnfälliger Aufbau.

Diese Aufgabe wird erfindungsgemäß dadurch gelöst, dass der Schwenkrahmen im Bereich seiner in Schnittrichtung einander entgegen gesetzten Enden auf an der Unterseite der Tischplatte anbringbaren Lagerböcken schwenkbar aufgehängt und mittels einer angelenkten, mit Schwenkfreiheitsgrad angeordneten Stellstange verschwenkbar ist, dass die auf dem Schwenkrahmen aufgenommene Werkzeugkonsole mittels eines auf dem Schwenkrahmen angeordneten Stellorgans in der Höhe verstellbar ist, das mit einer verlängerbaren Gelenkwelle antriebsmäßig verbunden ist, und dass die Stellstange und die Gelenkwelle mittels wenigstens eines an der Bedienungsseite des Maschinengestells fest positionierten Bedienungsorgans betätigbar sind.

Die Tischplatte sowie der Schwenkrahmen samt Werkzeugkonsole bilden hier in vorteilhafter Weise eine gemeinsam vormontierbare Baugruppe. Dies erleichtert die Erzielung einer exakten Lage der mit der Tischoberfläche koplanaren Schwenkachse des Schwenkrahmens und damit eine hohe Arbeitsgenauigkeit. Die dem Schwenkrahmen zugeordnete, mittels eines Bedienungsorgans betätigbare Stellstange ermöglicht zudem eine hohe Untersetzung, was sich vorteilhaft auf die erzielbare Bediengenauigkeit auswirkt. Dasselbe gilt für die der Werkzeugkonsole zugeordnete Gelenkwelle, der Untersetzungseinrichtungen vor- und/oder nachgeordnet sein können. Ein weiterer Vorteil der erfindungsgemäßen Maßnahmen ist darin zu sehen, dass jedes Bedienungsorgan in Folge der Beweglichkeit innerhalb des Antriebszugs zum Schwenkrahmen bzw. zur Werkzeugkonsole in seiner Position stationär ist, so dass auch kein einer mit einem Betätigungsorgan verbundenen Welle zugeordneter Durchgriffsschlitz des Gehäuses benötigt wird. Die Folge davon sind eine hohe Bedienungsfreundlichkeit und Sicherheit sowie eine hohe Stabilität des Maschinengehäuses. Mit den erfindungsgemäßen Maßnahmen werden daher die Nachteile des eingangs genannten Standes der Technik in vorteilhafter Weise vollständig vermieden.

Vorteilhafte Ausgestaltungen und zweckmäßige Fortbildungen der übergeordneten Maßnahmen sind in den Unteransprüchen angegeben.

So kann die dem Schwenkrahmen zugeordnete Stellstange vorteilhaft als Gewindespindel ausgebildet sein, die einerseits in eine schwenkbar und in axialer Richtung feststehend im Schwenkrahmen aufgenommene Mutter eingreift und andererseits um die Achse des zugeordneten Betätigungsorgans schwenkbar gelagert ist und über ein Winkelgetriebe mit dem zugeordneten Betätigungsorgan zusammenwirkt. Die Verwendung einer Gewindespindel ermöglicht eine vergleichsweise hohe Untersetzung, was bei Bedarf durch entsprechende Gestaltung des Winkelgetriebes noch unterstützt werden kann. Zudem ergibt die Gewindespindel in vorteilhafter Weise eine Selbsthemmung, was den Bedienungskomfort und die Genauigkeit unterstützt.

In weiterer Fortbildung der übergeordneten Maßnahmen kann das der Werkzeugkonsole zugeordnete Stellorgan vorteilhaft als stehend auf dem Schwenkrahmen angeordnete Gewindespindel ausgebildet sein, die in eine an der Werkzeugkonsole fest angebrachte Mutter eingreift und über ein Winkelgetriebe mit der an beiden Enden mit Gelenken versehenen Gelenkwelle verbunden ist. Auch hierbei lassen sich in vorteilhafter Weise eine hohe Untersetzung sowie eine Selbsthemmung erreichen.

Eine weitere, besonders zu bevorzugende Maßnahme kann darin bestehen, dass der Stellstange und der Stellspindel jeweils ein eigenes Betätigungsorgan zugeordnet ist, wobei diese Betätigungsorgane vorteilhaft mit seitlichem Abstand auf gleicher Höhe angeordnet sein können. Diese Maßnahmen ermöglichen eine synchrone Betätigung der Schwenkeinrichtung und der Höhenverstellung.

Zweckmäßig kann der Schwenkrahmen als Gußformling ausgebildet sein, der eine stehende Wand enthält, die mit wenigstens einem nach oben offenen, von einer ein Bearbeitungswerkzeug tragenden Welle durchgriffenen Durchgriffsfenster versehen ist und auf der werkzeugfernen Seite einen die der Werkzeugkonsole zugeordnete, stehende Gewindespindel aufnehmenden Vorsprung sowie eine spindelparallele Führung für die Werkzeugkonsole aufweist. Hierdurch ergibt sich eine kostengünstig herstellbare, verwindungssteife Ausbildung des Schwenkrahmens. Es genügt daher in vorteilhafter Weise eine Stellstange.

Vorteilhaft kann der Schwenkrahmen zumindest werkzeugseitig mit einem umlaufenden, vorzugsweise im Werkzeugbereich unterbrochenen Randflansch versehen sein, an dem eine Abdeckplatte angebracht ist. Hierdurch wird in vorteilhafter Weise eine dem Werkzeug zugeordnete, nach oben offene Kammer gebildet, die an eine Absaugeinrichtung anschließbar ist, was die Spanabfuhr erleichtert.

Zweckmäßig kann auch die Werkzeugkonsole als Gußformling ausgebildet sein, der eine stehende Wand enthält, die einerseits mit mit Führungsbüchsen versehenen Vorsprüngen sowie mit einem der das Werkzeug tragenden Welle zugeordneten Lagerbereich und andererseits mit einem die mit der das Stellorgan bildenden Gewindespindel zusammenwirkende Mutter enthaltenden Vorsprung versehen ist. Hierbei ergibt sich eine kostengünstig herstellbare, verwindungssteife Ausbildung der Werkzeugkonsole. Gleichzeitig führt die Verwendung von Gußformlingen für den Schwenkrahmen und die Werkzeugkonsole auch zu einer hohen Schwingungsfreiheit, was sich ebenfalls positiv auf die erzielbare Genauigkeit auswirkt.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine Ansicht der Bedienungsseite einer erfindungsgemäßen Kreissäge mit abgenommenen Revisionsdeckel und teilweise ausgebrochener Frontwand,
- Figur 2: einen Längsschnitt durch die Anordnung gemäß Figur 1,
- Figur 3: eine schematische Draufsicht auf die Anordnung gemäß Figur 1 bei entfernter Tischplatte,
- Figur 4: eine perspektivische Ansicht des Schwenkrahmens mit aufgenommener Werkzeugkonsole und zugeordneten Lagerböcken,
- Figur 5: eine Ansicht eines an den Schwenkrahmen anbaubaren Vorritzaggregats und
- Figur 6: eine der Figur 1 entsprechende Ansicht der erfindungsgemäßen Kreissäge mit angebrachtem, Anzeigeeinrichtungen enthaltendem Revisionsdeckel.

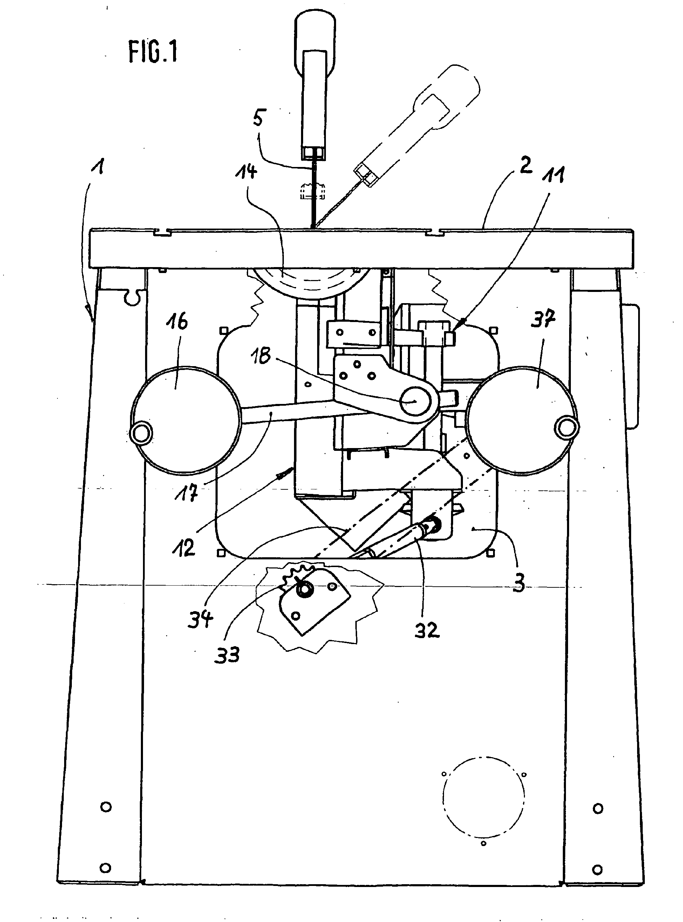

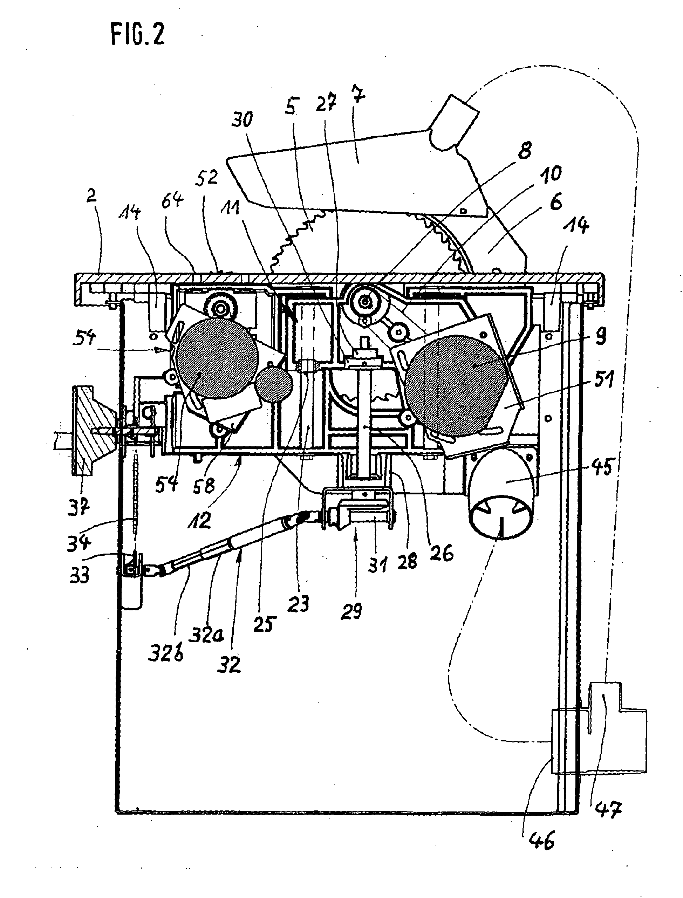

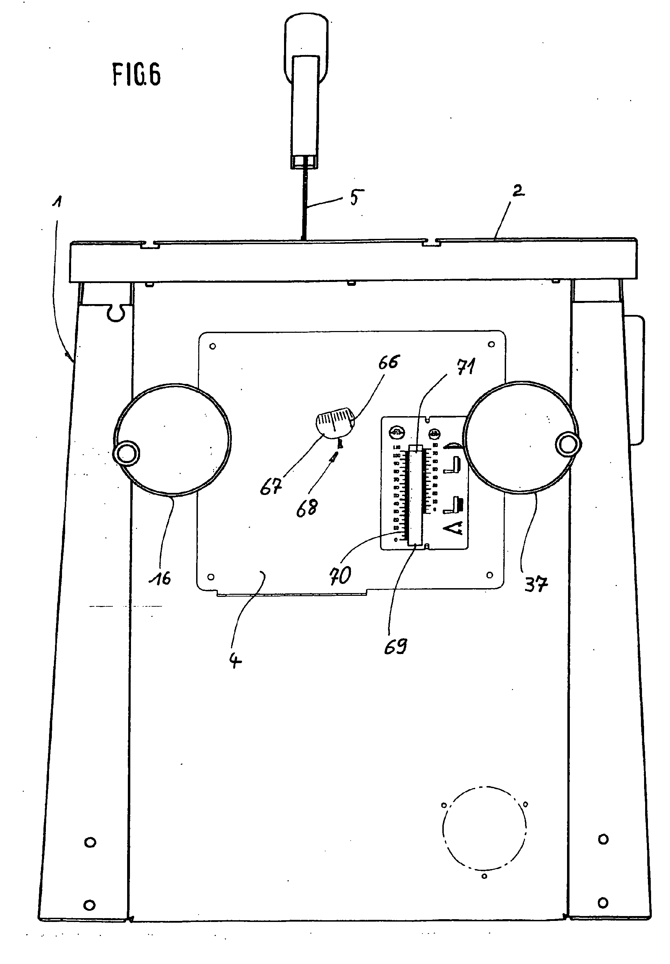

Hauptanwendungsgebiet der Erfindung sind mit einem Bearbeitungswerkzeug in Form eines kreisförmigen Sägenblatts ausgestattete Kreissägen. Die der Zeichnung zugrunde liegende Kreissäge besitzt ein gehäuseartiges Maschinengestell 1, auf dem eine Tischplatte 2 aufgenommen ist. Das gehäuseartige Maschinengestell 1 ist, wie aus Fig. 1 ersichtlich ist, an der Bedienseite mit einer Revisionsluke 3 versehen ist, die mittels eines in Fig. 1 entfernten Revisionsdeckels verschließbar ist. In Fig. 6 ist der Revisionsdeckel 4 angebracht. Die Tischplatte 2 besitzt einen in den Zeichnungen nicht näher dargestellten Durchtrittsschlitz, durch den das Bearbeitungswerkzeug, hier in Form eines Sägenblatts 5 durchgreift. Im Sägenblatt 5 ist ein am besten aus Figur 2 erkennbarer Spaltkeil 6 zugeordnet, an dem eine Absaughaube 7 angebracht sein kann.

Das Sägenblatt 5 ist in der Höhe verstellbar, um unterschiedlich dicke Werkstücke schneiden zu können. Um gegenüber der Oberfläche der Tischplatte 2 geneigte Schnitte ausführen zu können, kann das Sägenblatt 5 verschwenkt werden. Die Schwenkachse wird praktisch durch die Verschneidungslinie der Oberfläche der Tischplatte 2 mit der Mittelebene des Sägenblatts 5 gebildet. Dabei kann ausgehend von der in Fig. 1 mit durchgehenden Linien angedeuteten lotrechten Mittelstellung eine Schwenkbarkeit nach jeweils einer Seite (links oder rechts) oder nach beiden Seiten vorgesehen sein. Zwei Stellmöglichkeiten sind in Fig. 1 mit unterbrochenen Linien angedeutet.

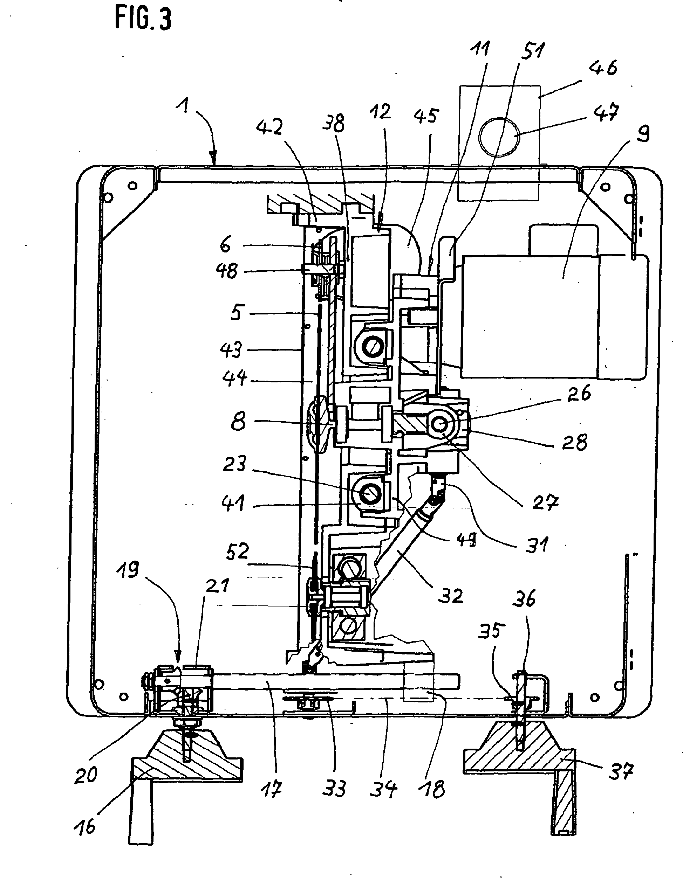

Das Sägenblatt 5 ist, wie aus den Fig. 2 und 3 entnehmbar ist, auf eine unterhalb der Tischplatte 2 sich befindende Werkzeugwelle 8 aufspannbar, die mittels eines zugeordneten Elektromotors 9 antreibbar ist. Zweckmäßig ist dabei die Motorwelle gegenüber der Werkzeugwelle 8 versetzt und hiermit, wie am besten aus Fig. 2 erkennbar ist, durch ein Vorgelege 10 antriebsmäßig verbunden, bei dem es sich um einen Riementrieb handeln kann. Die Werkzeugwelle 8 ist, wie die Fig. 2 und 3 weiter zeigen, auf einer Werkzeugkonsole 11 gelagert, an der auch der Motor 9 angebracht ist. Die Werkzeugkonsole 11 ist ihrerseits in der Höhe verstellbar auf einem unterhalb der Tischplatte 2 angeordneten, um die oben definierte, zur Tischoberseite koplanare Schwenkachse schwenkbaren Schwenkrahmen 12 aufgenommen.

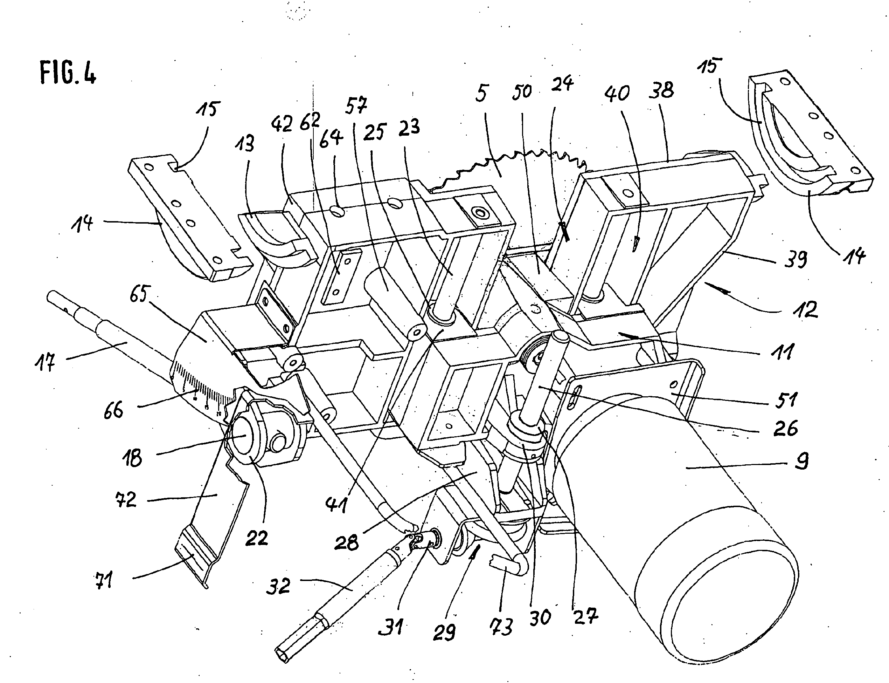

Dieser ist, wie am besten aus Fig. 4 ersichtlich ist, mit an seinen in Schnittrichtung einander entgegengesetzten Enden angebrachten, konzentrisch zur oben genannten Schwenkachse verlaufenden, ringsegmentförmigen Lagerleisten 13 versehen und mit diesen in an der Unterseite der Tischplatte 2 anschraubbaren Lagerböcken 14 schwenkbar gelagert. Die Lagerböcke 14 sind mit den Lagerleisten 13 zugeordneten Segmentnuten 15 versehen, in welche die Lagerleisten 13 nach Art von Nut und Feder eingreifen. Die Tischplatte 2, die hieran anschraubbaren Lagerböcke 14 sowie der hierauf aufnehmbare Schwenkrahmen 12 und die auf diesem aufnehmbare Werkzeugkonsole 11 bilden eine gemeinsam vormontierbare Baugruppe. Die Werkzeugkonsole 11 und der Schwenkrahmen 12 sind zweckmäßig als Gußformlinge ausgebildet, wie aus Fig. 4 anschaulich hervorgeht.

Zum Schwenken des Schwenkrahmens 12 ist diesem, wie aus den Fig. 1 und 3 entnehmbar ist, eine mittels eines im Bereich der Bedienungsseite des Maschinengestells 1 angeordneten Handrads 16 betätigbare Stellstange 17 zugeordnet, die an den Schwenkrahmen 12 angelenkt ist und den erforderlichen Schwenkfreiheitsgrad besitzt. Die Stellstange 17 kann z.B. als Gewindestange etc. ausgebildet sein. Im dargestellten Beispiel ist die Gewindestange 17 vorteilhaft als Gewindespindel ausgebildet, die einerseits in eine schwenkbar und in axialer Richtung feststehend am Schwenkrahmen 12 angebrachte Mutter 18 eingreift und andererseits um die Drehachse des zugeordneten Handrads 16 schwenkbar ist und die über ein Winkelgetriebe 19 mit dem Handrad 16 zusammen wirkt, wie aus Fig. 3 ersichtlich ist. Das Winkelgetriebe 19 wird durch zwei Kegelräder gebildet, von denen eines auf einem mit dem Handrad 16 verbundenen, gestellseitig gelagerten Wellenstummel 20 und eines auf dem benachbarten, in ein um die Achse des Wellenstummels 20 schwenkbares Lagergehäuse 21 eingreifenden Ende der Stellstange 17 aufgenommen ist. Die Ausbildung der Stellstange 17 als Gewindespindel führt zu einer selbsthemmenden Anordnung mit großer Untersetzung. Die der Gewindespindel zugeordnete Mutter 18 ist, wie am besten aus Fig. 4 erkennbar ist, als um seine Achse schwenkbar in einem gabelförmigen Lageransatz 22 des Schwenkrahmens 12 gelagerter Bolzen ausgebildet, der mit einer quer zu seiner Achse verlaufenden Gewindebohrung versehen ist, in welche die die Steilstange 17 bildende Gewindespindel eingreift.

Die in der Höhe verstellbar auf dem Schwenkrahmen 12 aufgenommene Werkzeugkonsole 11 ist, wie aus den Fig. 2 bis 4 hervorgeht, auf vertikalen Führungsstangen 23 des Schwenkrahmens 12 geführt. Im dargestellten Beispiel sind zwei ein Durchgriffsfenster 24 für die Werkzeugwelle 8 bzw. die dieser zugeordnete Lagereinrichtung flankierende Führungsstangen 23 vorgesehen. Die Werkzeugkonsole 11 ist mit den Führungsstangen 23 zugeordneten Lagerbüchsen 25 versehen. Zur Bewerkstelligung einer vertikalen Verstellbarkeit der Werkzeugkonsole 11 auf dem Schwenkrahmen 12 ist, wie die Fig. 2 bis 4 weiter erkennen lassen, eine zu den Führungsstangen 23 parallele, stehend auf dem Schwenkrahmen aufgenommene, als diesem zugeordnetes Stellorgan dienende Gewindespindel 26 vorgesehen, die im Eingriff mit einer an der Werkzeugkonsole 11 befestigten Mutter 27 ist.

Die Gewindespindel 26 ist auf einer die Werkzeugkonsole 11 untergreifenden Auskragung 28 des Schwenkrahmens 12 aufgenommen und über ein an der Unterseite der Auskragung 28 angeordnetes Winkelgetriebe 29 antreibbar. Die Mutter 27 befindet sich auf einer die Auskragung 28 übergreifenden Auskragung 30 der Werkzeugkonsole 11.

Das Winkelgetriebe 29 wird durch zwei Kegelräder gebildet, von denen eines an einem die Auskragung 28 durchgreifenden Aufnahmestummel der Gewindespindel 26 befestigt ist und das zweite auf einer zugeordneten, auf einem durch einen an der Auskragung 28 befestigten Bügel gebildeten Getriebegehäuse gelagerten Getriebewelle 31 aufgenommen ist. An die Getriebewelle 31 ist eine Gelenkwelle 32 angelenkt, die mit ihrem anderen Ende, wie am besten aus Fig. 2 ersichtlich ist, an ein an der Innenseite der bedienungsseitigen Wand des Maschinengestells 1 drehbar gelagertes Antriebsrad 33 angelenkt ist. Dieses ist, wie aus den Fig. 2 und 3 ersichtlich ist, über ein Umlauforgan 34 antriebsmäßig mit einem zugeordneten Gegenrad 35 verbunden, das auf einem in der bedienungsseitigen Wand des Maschinengestells 1 drehbar gelagerten Wellenstummel 36 aufgenommen ist, das an seinem äußeren Ende ein zugeordnetes Handrad 37 trägt. Das Umlauforgan 34 ist zweckmäßig als Kette ausgebildet. Das Antriebsrad 33 und das Gegenrad 35 sind daher als Kettenräder ausgebildet. Natürlich könnte das Handrad 37 auch an einer das Antriebsrad 33 aufnehmenden Welle angebracht sein. Die dargestellte Ausführung erleichtert jedoch eine höhengleiche Anordnung der Handräder 16 und 37.

Durch Drehen des Handrads 37 wird die Gewindespindel 26 über den beschriebenen Antriebszug in Form des das Umlauforgan 34 enthaltenden Kettentriebs, der beidseitig mit Gelenken versehenen Gelenkwelle 32 und des Winkelgetriebes 29 angetrieben. Die Drehbewegung der Gewindespindel 26 wird durch die Mutter 27 in eine Stellbewegung der Werkzeugkonsole 11 umgesetzt. Dabei ergeben sich eine hohe Gesamtuntersetzung sowie eine Selbsthemmung.

Die Länge der beidseitig mit Gelenken versehenen Gelenkwelle 32 ist veränderbar, so dass die Gelenkwelle 32 eine Schwenkbewegung des Schwenkrahmens 12 zulässt. Hierzu ist die Gelenkwelle 32 als zweiteilige Welle mit zwei Wellenabschnitten 32a, b ausgebildet, die teleskopartig ineinander eingreifende Mehrkantbereiche aufweisen. Diese können an den jeweils zugeordneten Wellenabschnitt angeformt sein.

Im dargestellten Beispiel sind zwei Handräder 16 bzw. 37 vorgesehen, von denen das Handrad 16 zur Bewerkstelligung einer Schwenkbewegung des Schwenkrahmens 12 und das Handrad 37 zur Bewerkstelligung einer Höhenverstellung der auf dem Schwenkrahmen 12 aufgenommenen Werkzeugkonsole 11 dient. Die Handräder 16 bzw. 37 sind mit seitlichem Abstand auf etwa gleicher Höhe im Bereich der Bedienungsseite des Maschinengestells 1 angeordnet, wie aus Fig. 1 hervorgeht. Es wäre aber auch denkbar, zur Bewerkstelligung der Schwenkbewegung und Höhenverstellung nur ein gemeinsames Handrad vorzusehen. Dieses könnte axial verstellbar angeordnet und in seinen Endstellungen alternativ mit einem mit der Stellstange 17 bzw. der Gelenkwelle 32 zusammenwirkenden Organ kuppelbar sein.

Der Schwenkrahmen 12 ist zweckmäßig, wie oben bereits erwähnt wurde, als Gußformling ausgebildet. Dieser besitzt, wie aus den Fig. 3 und 4 erkennbar ist, eine das der Werkzeugwelle 8 zugeordnete Durchgriffsfenster 24 enthaltende stehende Wand 38, die auf der werkzeugfernen Seite mit einer einen randseitig umlaufenden Randflansch enthaltenden Verrippung 39 versehen ist. Diese ist so ausgebildet, dass sich zwei das Durchtrittsfenster 24 flankierende, über die ganze Höhe des Schwenkrahmens 12 durchgehende Kammern 40 ergeben, in denen jeweils eine Führungsstange 23 angeordnet ist. Die Führungsstangen 23 sind mit ihren oberen und unteren Enden an den die jeweils zugeordnete Kammer verschließenden Randflanschbereichen befestigt. Die Werkzeugkonsole 11 ist mit in die Kammern 40 hineinragenden, jeweils eine von einer Führungsstange 23 durchsetzte Führungsbüchse 25 enthaltenden Vorsprüngen 41 versehen. Im Bereich unterhalb des Durchgriffsfensters 24 befindet sich die der Gewindespindel 26 zugeordnete Auskragung 28 des Schwenkrahmens 12, die in die Verrippung 39 integriert sein kann. Der zur Aufnahme der der Stellstange 17 zugeordneten Mutter 18 vorgesehene, gabelförmige Ansatz 22 ist im Bereich des der Bedienungsseite zugewandten Endes des Schwenkrahmens 12 an diesem angebracht, zweckmäßig angeformt. Hierbei kann der Ansatz 22 in die Verrippung 39 integriert sein.

Auf der dem Bearbeitungswerkzeug 5 zugewandten Seite ist die Wand 38 des Schwenkrahmens 12 nicht verrippt. Hier ist lediglich ein zumindest seitlich und unten umlaufender, oben weggelassener, bzw. zumindest im Bereich des Bearbeitungswerkzeugs unterbrochener Randflansch 42 vorgesehen, an dem eine wandparallele Abdeckplatte 43 angebracht ist, wie Fig. 3 zeigt. Auf diese Weise ergibt sich eine nach oben offene Aufnahmekammer 44 für das Bearbeitungswerkzeug 5. Von der Aufnahmekammer 44 geht ein in den Fig. 2 und 3 gezeigter Anschlussstutzen 45 für eine Absaugleitung ab. Der Anschlussstutzen 45 kann durch einen nicht näher dargestellten Schlauch mit einem im Bereich einer Wand des Maschinengestells 1 vorgesehenen Durchführstutzen 46 verbunden sein, der einen Anschlussstutzen 47 für eine von der Absaughaube 7 abgehende Leitung aufweisen kann und durch einen Schlauch in an sich bekannter Weise mit einem Absauggebläse verbunden sein kann. Die Kammer 44 wird, wie aus Fig. 3 ersichtlich ist, von einem von der Wand 38 abstehenden Stift 48 durchgriffen, auf dem der Spaltkeil 6 aufnehmbar ist.

Die Werkzeugkonsole 11 ist ebenfalls als Gußformling ausgebildet, der wie aus den Fig. 3 und 4 hervorgeht, eine zur Wand 38 des Schwenkrahmens 12 parallele, stehende Wand 49 enthält, an die einerseits eine der Werkzeugwelle 8 zugeordnete Lagereinrichtung 50 und die die Lagerbüchsen 25 enthaltenden Vorsprünge 41 und andererseits die die Mutter 27 tragende Auskragung 30 angeformt sind. Auf der vom Schwenkrahmen 12 abgewandten Seite ist die Wand 49 zweckmäßig verrippt. An dieser Verrippung ist, wie aus den Fig. 2 bis 4 hervorgeht, eine wandparallele Halteplatte 51 verstellbar angebracht, die den Motor 9 trägt. Die Verstellbarkeit der Halteplatte 51 ermöglicht eine zuverlässige Spannung des Riemens des Riementriebs 10. Im dargestellten Beispiel wird die Halteplatte 51 durch Schrauben gehalten, die zugeordnete Langlöcher durchgreifen.

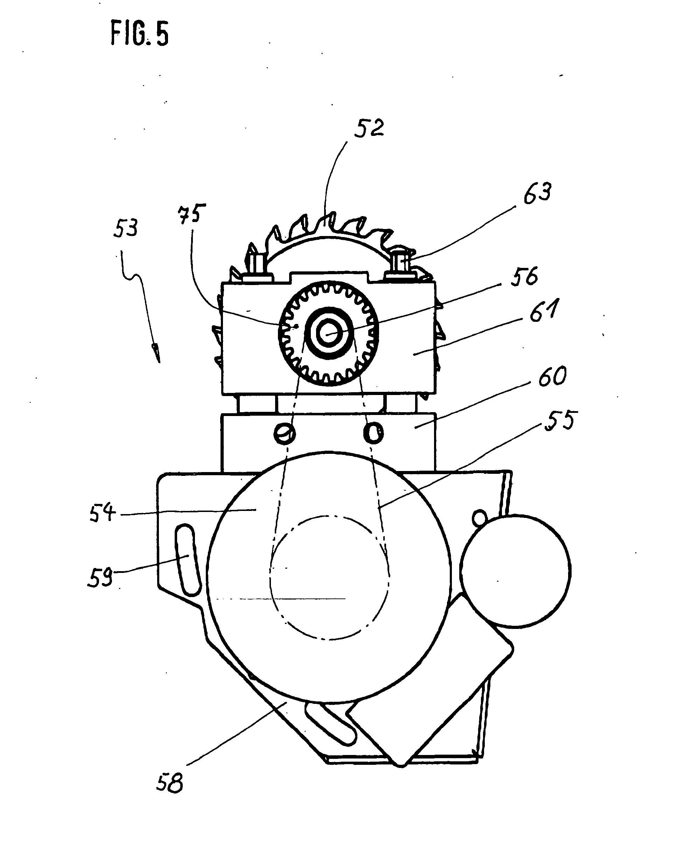

Beim Schneiden von beschichteten Platten etc. wird in der Regel ein gegenläufig zum eigentlichen Bearbeitungswerkzeug 5 drehendes Vorritzwerkzeug benötigt. In Fig. 5 ist ein ein Vorritzwerkzeug 52 enthaltendes Vorritzaggregat 53 dargestellt, das wahlweise an den Schwenkrahmen 12 angesetzt werden kann. In den Figuren 2 und 3 ist das Vorritzaggregat 53 am Schwenkrahmen 12 angebracht. In Figur 4 ist das Vorritzaggregat entfernt. Das Vorritzwerkzeug 52 befindet sich in einer Ebene mit dem Bearbeitungswerkzeug 5 und durchtrennt die Beschichtung einer Platte, die anschließend mit Hilfe des Bearbeitungswerkzeugs 5 ohne die Gefahr des Ausbrechens der Beschichtung durchtrennt werden kann. Das Vorritzaggregat 53 enthält einen Elektromotor 54, der über ein zweckmäßig als Riementrieb ausgebildetes Vorgelege 55 antriebsmäßig mit einer das Vorritzwerkzeug 52 aufnehmenden Welle 56 verbunden ist. Das Vorritzaggregat 53 ist, wie schon erwähnt, als Anbauaggregat ausgebildet. Hierzu enthält das Vorritzaggregat 53 eine Anbaueinrichtung, die auf einer zugeordneten Aufnahmeeinrichtung des Schwenkrahmens 12 aufnehmbar ist.

Im dargestellten Beispiel ist die stehende Wand 38 des Schwenkrahmens 12, wie aus Fig. 4 entnehmbar ist, mit die Aufnahmeeinrichtung für das Vorritzaggregat 53 bildenden, von der werkzeugfernen Seite abstehenden Anschraubdomen 57 versehen. Das Vorritzaggregat enthält ein Anbauschild 58, das, wie durch Bogenschlitze 59 angedeutet ist, verstellbar an den Anschraubdomen 57 festlegbar ist.

Am Anbauschild 58 ist, wie aus Fig. 5 ersichtlich ist, einerseits der Motor 54 und andrerseits ein Stützblock 60 angebracht, auf dem ein das Vorritzwerkzeug 52 enthaltender Stellblock 61 in der Höhe und axial verstellbar aufgenommen ist. Im Stellblock 61 ist die das Vorritzwerkzeug 52 tragende Welle 56 gelagert, die mit ausreichend Spiel für eine axiale und vertikale Verstellung durch eine zugeordnete Ausnehmung der Wand 38 durchführbar ist. Die genannte Ausnehmung ist in Fig. 4 durch eine Abdeckplatte 62 abgedeckt. Der Stellblock 61 ist, wie aus Fig. 5 weiter hervorgeht, mit zwei Stellschrauben 63 versehen, von denen eine zur Höhenverstellung und eine zur axialen Verstellung dient. Die Höhenverstellung erfolgt über das Gewinde der zugeordneten Schraube 63. Die Anordnung des Motors 54 ist so, dass der Riemen des Vorgeleges 55 in jeder Stellung des Stellblocks 61 gespannt ist. Zur Axialverstellung ist die zugeordnete Schraube 63 mit einer in Figur 5 nicht sichtbaren Schnecke versehen. Diese wirkt mit einem umfangsseitig in eine zugeordnete Ausnehmung des Stellblocks eingepassten, axial verschiebbaren Zahnrad 75 zusammen, das einen seitlichen Bund aufweist, der mit einem Gewinde versehen ist, das in ein Gegengewinde des Stellblocks eingreift. Im Zahnrad 75 samt Bund ist die Welle 56 gelagert. Die Stellschrauben 63 sind über in Fig. 2 und 4 gezeigte Löcher 64 in der Tischplatte 2 und in der Oberseite des Schwenkrahmens 12 von oben erreichbar und mittels eines geeigneten Steckwerkzeugs betätigbar.

Zur Erleichterung einer genauen Einstellung der gewünschten Höhe des Bearbeitungswerkzeugs 5 bzw. des gewünschten Schwenkwinkels des Bearbeitungswerkzeugs 5 sind zugeordnete Anzeigeeinrichtungen vorgesehen, auf denen die eingestellte Höhe bzw. der eingestellte Schwenkwinkel ablesbar sind. Die Anzeigeeinrichtungen bestehen jeweils aus einer Skala und einem zugeordneten Zeiger, wobei die Anordnung so getroffen ist, dass eine Ablesbarkeit im Bereich der Bedienungsseite gegeben ist, wie aus Fig. 6 hervorgeht.

Die Winkelanzeigeeinrichtung enthält eine auf einer am der Bedienungsseite des Maschinengestells 1 zugewandten Ende des Schwenkrahmens 12 befestigten parallel zur bedienungsseitigen Wand des Maschinengestells 1 sich erstreckenden, in Fig. 4 gezeigten Platte 65 angebrachte Winkelskala 66. Die bedienungsseitige Wand des Maschinengestells 1, hier der ein Element dieser Wand bildende Revisionsdeckel 4 ist, wie aus Fig. 6 hervorgeht, mit einem Fenster 67 versehen, in welchem die Winkelskala 66 erscheint. Am Rand des Fensters 66 ist ein Zeiger 68 fest angebracht, der die eingestellte Winkelstellung anzeigt. Zur Verbesserung der Ablesbarkeit kann dem Fenster 67 eine Vergrößerungslinse zugeordnet sein.

Die Höhenanzeigeeinrichtung enthält wenigstens eine im Bereich des Rands eines Fensters 69 des Revisionsdeckels 4 angebrachte Höhenskala 70, der ein im Bereich des Fensters 69 erscheinender beweglicher Zeiger 71 zugeordnet ist. Dieser ist, wie Fig. 4 zeigt, an einer zur bedienungsseitigen Wand des Maschinengestells 1 parallelen Lasche 72 angebracht, die mittels eines Bügels 73 an der in der Höhe verstellbaren Werkzeugkonsole 11 befestigt ist. Im Bereich des Fensters 69 sind zweckmäßig mehrere unterschiedliche Höhenskalen 70 vorgesehen, die unterschiedlichen Werkzeugdurchmessern zugeordnet sind. Im dargestellten Beispiel sind, wie aus Fig. 6 ersichtlich ist, zwei verschiedene Höhenskalen 70 vorgesehen.

## Patentansprüche

1. Holzbearbeitungsmaschine, insbesondere Kreissäge, mit einem Maschinengestell (1), auf dem eine Tischplatte (2) aufgenommen ist, und mit einem unterhalb der Tischplatte (2) angeordneten, um eine mit der Oberseite der Tischplatte (2) koplanare Schwenkachse schwenkbaren Schwenkrahmen (12), auf dem eine höhenverstellbare Werkzeugkonsole (11) angeordnet ist, die wenigstens ein einen zugeordneten Schlitz der Tischplatte (2) durchgreifendes Bearbeitungswerkzeug (5) trägt, das auf eine Welle (8) aufspannbar ist, die mittels eines an der Werkzeugkonsole (11) angebrachten Motors (9) antreibbar ist, **dadurch gekennzeichnet, dass** der Schwenkrahmen (12) im Bereich seiner in Schnittrichtung einander entgegengesetzten Enden auf an der Unterseite der Tischplatte (2) anbringbaren Lagerböcken (14) schwenkbar aufgehängt und mittels einer angelenkten, mit Schwenkfreiheitsgrad angeordneten Stellstange (17) verschwenkbar ist, dass die auf dem Schwenkrahmen (12) aufgenommene Werkzeugkonsole (11) mittels eines auf dem Schwenkrahmen (12) angeordneten Stellorgans in der Höhe verstellbar ist, das mit einer verlängerbaren Gelenkwelle (32) antriebsmäßig verbunden ist, und dass die Stellstange (17) und die Gelenkwelle (32) mittels wenigstens eines an der Bedienungsseite des Maschinengestells (1) fest positionierten Bedienungsorgans (16) bzw. (37) betätigbar sind.

2. Holzbearbeitungsmaschine nach Anspruch 1, **dadurch gekennzeichnet, dass** die dem Schwenkrahmen (12) zugeordnete Stellstange (17) als Gewindespindel ausgebildet ist, die einerseits in eine schwenkbar und in axialer Richtung feststehend im Schwenkrahmen (12) aufgenommene Mutter (18) eingreift und andererseits um die Achse des zugeordneten Betätigungsorgans (16) schwenkbar gelagert ist und über ein Winkelgetriebe (19) mit dem zugeordneten Betätigungsorgan (16) zusammenwirkt, wobei die Mutter (18) vorzugsweise als mit einer quer zu seiner Achse verlaufenden Gewindebohrung versehener Bolzen ausgebildet ist, der auf einem gabelförmigen Ansatz (22) des Schwenrahmens (12) um seine Achse schwenkbar gelagert ist.

3. Holzbearbeitungsmaschine nach einem der vorhergehenden Ansprüche, **dadurch gekennzeichnet, dass** das der Werkzeugkonsole (11) zugeordnete Stellorgan (26) als stehend auf dem Schwenkrahmen (12) angeordnete Gewindespindel ausgebildet ist, die in eine an der Werkzeugkonsole (11) fest angebrachte Mutter (27) eingreift und über ein Winkelgetriebe (29) mit der an beiden Enden mit Gelenken versehenen Gelenkwelle (32) verbunden ist, die vorzugsweise an ein mit dem zugeordneten Betätigungsorgan (37) über ein Umlauforgan (34) antriebsmäßig verbundenes, an der Innenseite der bedienungsseitigen Wand des Maschinengestells (1) vorgesehenes Antriebsrad (33) angelenkt ist und zwei Wellenabschnitte (32a, b) aufweist, die mit angeformten Mehrkantbereichen teleskopartig ineinander eingreifen, und dass der Schwenkrahmen (12) mit stehend angeordneten Führungsstangen (23) versehen ist, auf denen die Werkzeugkonsole (11) mit zugeordneten Führungsbüchsen (25) verschiebbar gelagert ist.

4. Holzbearbeitungsmaschine nach einem der vorhergehenden Ansprüche, **dadurch gekennzeichnet, dass** der Stellstange (17) und der Gelenkwelle (32) jeweils ein eigenes Betätigungsorgan (16 bzw. 37) zugeordnet ist und dass die Betätigungsorgane (16, 37) vorzugsweise mit seitlichem Abstand auf gleicher Höhe angeordnet sind.

5. Holzbearbeitungsmaschine nach einem der vorhergehenden Ansprüche, **dadurch gekennzeichnet, dass** der Schwenkrahmen (12) als Gußformling ausgebildet ist, der eine stehende Wand (38) enthält, die mit wenigstens einem nach oben offenen, von einer ein Bearbeitungswerkzeug (5) tragenden Welle (8) durchgriffenen Durchtrittsfenster (24) versehen ist und die auf der werkzeugfernen Seite einen die das der Werkzeugkonsole (11) zugeordnete Steilorgan (26) bildende Gewindespindel aufnehmenden Vorsprung (28) sowie die der Werkzeugkonsole (11) zugeordneten Führungsstangen (23) aufweist, wobei vorzugsweise der Schwenkrahmen (12) werkzeugseitig mit einem zumindest seitlich und unten umlaufenden Randflansch (42) versehen ist, an dem eine Abdeckplatte (43) angebracht ist, die eine dem Bearbeitungswerkzeug (5) zugeordnete Kammer (44) begrenzt und wobei vorzugsweise der Schwenkrahmen (12) mit einem von der Kammer (44) abgehenden Anschlussstutzen (45) für eine Absaugleitung versehen ist, die vorzugsweise über einen Durchführstutzen (46) aus dem gehäuseartigen Maschinengestell herausführbar ist und wobei vorzugsweise die stehende Wand (38) des Schwenkrahmens (12) auf der werkzeugfernen Seite mit einer durch einen umlaufenden Randflansch begrenzten Verrippung (39) versehen ist, die zwei die Durchgriffsausnehmung (24) flankierende, über die Höhe der Wand (38) durchgehende Kammern (40) bildet, denen jeweils eine mit ihren Enden randflanschseitig befestigte Führungsstange (23) zur Führung der Werkzeugkonsole (11) zugeordnet ist.

6. Holzbearbeitungsmaschine nach einem der vorhergehenden Ansprüche, **dadurch gekennzeichnet, dass** die den Schwenkrahmen (12) aufnehmenden Lagerböcke (14) mit einer Segmentnut (15) versehen sind, in die am Schwenkrahmen (12) angebrachte, segmentförmige Lagerleisten (13) nach Art von Nut und Feder eingreifen.

7. Holzbearbeitungsmaschine nach einem der vorhergehenden Ansprüche, **dadurch gekennzeichnet, dass** die Werkzeugkonsole (11) als Gußformling ausgebildet ist, der eine stehende Wand (49) enthält, die einerseits mit die Führungsbüchsen (25) enthaltenden Vorsprüngen (41) sowie mit einer der das Bearbeitungswerkzeug (5) tragenden Welle (8) zugeordneten Lagereinrichtung (50) und andererseits mit einem die mit der zugeordneten Gewindespindel zusammenwirkende Mutter (27) enthaltenden Vorsprung (30) versehen ist, wobei vorzugsweise die Wand (49) der Werkzeugkonsole (11) auf der vom Schwenkrahmen (12) abgewandten Seite mit einer Verrippung versehen ist, an der eine Halteplatte (51) verstellbar angebracht ist, die den Motor (9) trägt und dass die das Bearbeitungswerkzeug (5) tragende, auf der Werkzeugkonsole (11) gelagerte Welle (8) über ein Vorgelege (10) antriebsmäßig mit dem zugeordneten verstellbar an der Werkzeugkonsole (11) anbringbaren Motor (9) verbunden ist.

8. Holzbearbeitungsmaschine nach einem der vorhergehenden Ansprüche, **dadurch gekennzeichnet, dass** der Schwenkrahmen (12) mit einer Aufnahmeeinrichtung zum Anbau eines Vorritzaggregats (53) versehen ist, das ein mittels eines Motors (54) antreibbares Vorritzwerkzeug (52) aufweist, das fluchtend zum Bearbeitungswerkzeug (5) der Werkzeugkonsole (11) ist.

9. Holzbearbeitungsmaschine nach Anspruch 8, **dadurch gekennzeichnet, dass** das Vorritzaggregat (53) ein vorzugsweise verstellbar an zugeordneten Anschraubdomen (57) des Schwenkrahmens (12) anbringbares Anbauschild (58) aufweist, an dem einserseits der Motor (54) und andererseits ein Stützblock (60) aufgenommen sind, auf dem ein das Vorritzwerkzeug (52) enthaltender Stellblock (61) vorzugsweise in der Höhe verstellbar aufgenommen ist, auf dem die Welle (56) des Vorritzwerkzeugs (52) axial verstellbar aufgenommen ist und der vorzugsweise mit Stellschrauben (63) versehen ist, die über zugeordnete Löcher (64) in der Tischplatte (2) und/oder im Schwenkrahmen (12) von oben erreichbar sind.

10. Holzbearbeitungsmaschine nach einem der vorhergehenden Ansprüche, **dadurch gekennzeichnet, dass** eine Winkelanzeigeeinrichtung und eine Höhenanzeigeeinrichtung vorgesehen sind, die jeweils aus Zeiger (68 bzw. 71) und Skala (66 bzw. 70) bestehen, wobei jeweils ein Organ im Bereich eines zugeordneten Fensters (67 bzw. 69) der bedienungsseitigen Wand des Maschinengestells (1) und das jeweils andere Organ der Winkelanzeigeeinrichtung am Schwenkrahmen (12) und der Höhenanzeigeeinrichtung an der Werkzeugkonsole (11) befestigt sind.

## Claims

1. A woodworking machine, in particular a circular saw, having a machine frame (1) on which a table board is accommodated, and further having a swivel frame (12) arranged underneath the table board (2), which can be swivelled about a swivel axis coplanar with the top side of the table board (2), which swivel frame (12) accommodates a height adjustable tool bracket (11) carrying at least one cutting tool (5) engaging an associated slot in the table board (2), which tool can be clamped onto a shaft (8) drivable by a motor (9) attached to the tool bracket (11), **characterised in that** the swivel frame (12) in the region of its ends, which in cutting direction lie opposite each other, is swivel-suspended on bearing brackets (14) which are mountable on the bottom side of the table board (2), and can be swivelled by means of an articulated adjusting rod (17) arranged with a degree of freedom for tilting movements, and further in that the tool bracket (11) accommodated on the swivel frame (12) can be height adjusted by means of an adjusting element provided on the swivel frame (12), such adjusting element being arranged in driving linkage with an extendable articulated shaft (32), and further **in that** the adjusting rod (17) and the articulated shaft (32) can be operated by at least one actuating means (16) or (37), respectively, which is firmly mounted on the operating side of the machine frame (1).

2. A woodworking machine as claimed in Claim 1, **characterised in that** the adjusting rod (17) associated with the swivel frame (12) may be designed as a threaded spindle which on one side engages a nut (18) which is swivel-mounted in the swivel frame (12), and in axial direction accommodated stationary in the same, and is on the other side swivel-mounted about the axle of the associated actuating means (16) and acts together with the associated actuating means (16) via an angle drive (19) with the nut (18) being preferably designed as a pin which is provided with a tapped hole extending transverse to its axis, such pin being mounted on a fork shaped bearing (22) of the swivel frame (12) and movable about its axis.

3. A woodworking machine as claimed in any of the preceding Claims, **characterised in that** the adjusting element (26) associated with the tool bracket (11) is designed as a threaded spindle which is provided on the swivel frame (12) in a vertical position, which threaded spindle engages a nut (27) firmly attached to the tool bracket (11) and, via an angle drive (29), is connected with an articulated shaft (32) provided with joints at both ends thereof, such articulated shaft (32) being preferably joined to a drive wheel (33) which is connected in driving linkage with an associated actuating element (37) via a circulating element (34) and swivel-mounted on the inner side of the operator-side wall of the machine frame (1), and comprising two shaft sections (32a, b) having multi edge areas formed integral therewith which engage each other in a telescope-like manner, and that the swivel frame (12) is provided with vertical adjusting rods (23) on which the tool bracket (11) with associated guide bushes (25) is arranged for sliding adjustment.

4. A woodworking machine as claimed in any of the preceding Claims, **characterised in that** associated with the adjusting rod (17) and the articulated shaft (32) is an actuating element (16 or 37, respectively) and that the actuating elements (16, 37) are preferably arranged at a certain lateral distance and at the same height level.

5. A woodworking machine as claimed in any of the preceding Claims, **characterised in that** the swivel frame (12) is designed as a casting comprising a vertical wall (38) which is provided with at least one window (24) opening toward the top through which extends a shaft (8) carrying a tool (5), and which wall, on the side away from the tool comprises a projection (28) which accommodates the vertical threaded spindle associated with the tool bracket (11) and forming the adjusting element (26), and further possesses guiding means (23) associated with the tool bracket (11), with the swivel frame (12), on its tool side; preferably being provided with a marginal flange (42) extending at least laterally and along the bottom to which a cover plate (43) is attached which limits a chamber (44) associated with the tool (5), with the swivel frame (12) preferably being provided with a connector (45) branching off from the chamber (44) and connecting a suction line which can preferably be moved out from the housing-like machine frame via a sleeve (46), and with the vertical wall (38) of the swivel frame (12), on the side away from the machine tool, preferably being provided with ribs (39) limited by a circumferential rim flange, such ribs (39) forming two chambers (40) which flank the window (24) and extend over the entire height of the wall (38), and to each of which chamber (40) an adjusting rod (23) for guiding the tool bracket (11) is associated with said rods being attached with their ends on the rim flange side.

6. A woodworking machine as claimed in any of the preceding Claims, **characterised in that** the bearing brackets (14) receiving the swivel frame (12) are provided with a segment groove (15) which is engaged in a groove and tongue manner by segment-shaped bearing strips (13) attached to the swivel frame (12).

7. A woodworking machine as claimed in any of the preceding Claims, **characterised in that** the tool bracket (11) is designed as a casting comprising a vertical wall (49) which on one side is provided with projections (41) having guide bushes (25), as well as a bearing device (50) associated with the shaft (8) carrying the tool (5) and, on the other side, with a projection (30) comprising the nut (27) acting together with the associated threaded spindle, with the wall (49) of the tool bracket (11) on the side away from the swivel frame (12) preferably being provided with ribs to which a support plate (51) is adjustably mounted which carries the motor (9), and that the shaft (8) mounted on the tool bracket (11) and carrying the tool (5) is connected in a linkage drive via a stepping down unit (10) with the associated motor (9) which is adjustably mountable on the tool bracket (11).

8. A woodworking machine as claimed in any of the preceding Claims, **characterised in that** the swivel frame (12) is provided with a fixture for attaching a scoring unit (53) comprising a scoring tool (52) drivable by means of a motor (54) and flush with the tool (5) of the tool bracket (11).

9. A woodworking machine as claimed in Claim 8, **characterised in that** the scoring unit (53) is provided with an add-on shield (58) which is screw-mountable on associated mandrels (57) preferably in an adjustable manner, such add-on shield (58) accommodating the motor (54), on the one hand, and a support block (60), on the other hand, which accommodates an adjusting block (61) adjustable in height and comprising the scoring unit (52), such adjusting block (61) accommodating the axially adjustable shaft (56) of the scoring unit (52), and being provided with adjusting screws (63) which are accessible from the top via associated holes (64) in the table board (2) and/or in the swivel frame (12).

10. A woodworking machine as claimed in any of the preceding Claims, **characterised in that** provision is made for an angle display unit and a height display unit, each of them comprising a pointer (68 and 71, respectively) and a scale (66 and 70, respectively), with one of these elements being attached in the area of an associated window (67 and 69, respectively) of the operator side wall of the machine frame (1), and the other element, in the case of the angle display unit, being attached to the swivel frame (12) and in the case of the height display unit being attached to the tool bracket (11).

## Revendications

1. Machine à travailler le bois, en particulier scie circulaire, avec un bâti de machine (1) sur lequel est reçue une planche de table (2) et avec un cadre pivotant (12) qui est disposé au-dessous de ladite planche de table (2), est apte à pivoter autour d'un axe de pivotement coplanaire avec la face supérieure de ladite planche de table (2) et sur lequel est disposée une console porte-outil (11) réglable en hauteur qui porte au moins un outil d'usinage (5) passant à travers une fente associée de la planche de table (2) et pouvant être serré sur un arbre (8) qui est entraînable au moyen d'un moteur (9) monté sur ladite console porte-outil (11), **caractérisée par le fait que** ledit cadre pivotant (12) est suspendu à pivotement, au niveau de ses extrémités opposées l'une à l'autre dans le sens de coupe, sur des blocs-supports (14) aptes à être montés sur la face inférieure de la planche de table (2) et est apte à pivoter grâce à une tige de réglage articulée (17) disposée avec un degré de liberté de pivotement, que ladite console porte-outil (11) reçue sur le cadre pivotant (12) est réglable en hauteur au moyen d'un organe de réglage qui est disposé sur ledit cadre pivotant (12) et est relié à entraînement à un arbre articulé (32) extensible, et que ladite tige de réglage (17) et ledit arbre articulé (32) sont aptes à être actionnés par le biais d'au moins un organe de commande (16) ou bien (37) positionné de manière fixe sur le côté de manoeuvre du bâti de machine (1).

2. Machine à travailler le bois selon la revendication 1, **caractérisée par le fait que** ladite tige de réglage (17) associée au cadre pivotant (12) est réalisée sous forme d'une broche filetée qui, d'un côté, se prend dans un écrou (18) reçu dans ledit cadre pivotant (12) de manière à pouvoir pivoter et à être fixe dans le sens axial, et qui, de l'autre côté, est logée à pivotement autour de l'axe de l'organe de commande (16) associé et agit de concert, via un engrenage angulaire (19), avec l'organe de commande (16) associé, ledit écrou (18) étant réalisé de préférence en tant que boulon qui est pourvu d'un trou taraudé s'étendant transversalement à son axe et qui est logé sur un épaulement en fourche (22) du cadre pivotant (12) de manière à pouvoir pivoter autour de son axe.

3. Machine à travailler le bois selon l'une quelconque des revendications précédentes, **caractérisée par le fait que** ledit organe de réglage (26) associé à la console porte-outil (11) est réalisé sous forme d'une broche filetée qui est disposée verticalement sur ledit cadre pivotant (12), se prend dans un écrou (27) solidaire de ladite console porte-outil (11) et est reliée, via un engrenage angulaire (29), à l'arbre articulé (32) pourvu d'articulations aux deux extrémités qui, de préférence, est articulé sur une roue motrice (33) reliée à entraînement, par un organe circulant (34), à l'organe de commande (37) associé et prévue sur la face intérieure de la paroi du bâti de machine (1) située du côté de manoeuvre, et qui comprend deux sections d'arbre (32a, b) lesquelles s'engagent l'une dans l'autre à la manière d'un télescope, avec des zones polygonales y formées, et que ledit cadre pivotant (12) est pourvu de tiges de guidage (23) disposées verticalement sur lesquelles ladite console porte-outil (11) est logée à déplacement avec des douilles de guidage (25) associées.

4. Machine à travailler le bois selon l'une quelconque des revendications précédentes, **caractérisée par le fait qu'**à la tige de réglage (17) et à l'arbre articulé (32) es associé respectivement un propre organe de commande (16 ou bien 37) et que lesdits organes de commande (16, 37) sont disposés, de préférence avec une distance latérale, à la même hauteur.

5. Machine à travailler le bois selon l'une quelconque des revendications précédentes, **caractérisée par le fait que** ledit cadre pivotant (12) est réalisé comme pièce moulée qui comprend une paroi verticale (38) qui est pourvue d'au moins une fenêtre de passage (24) ouverte vers le haut et traversée par un arbre (8) portant un outil d'usinage (5) et qui, du côté éloigné de l'outil, présente une saillie (28) recevant la broche filetée formant l'organe de réglage (26) associé à la console porte-outil (11) ainsi que les tiges de guidage (23) associées à la console porte-outil (11), de préférence ledit cadre pivotant (12) étant pourvu, du côté de l'outil, d'une bride de bord (42) s'étendant au moins latéralement et en bas sur laquelle est montée une plaque de recouvrement (43) qui délimite une chambre (44) associée à l'outil d'usinage (5), et, de préférence, ledit cadre pivotant (12) étant pourvu d'une tubulure de raccordement (45) pour une conduite d'aspiration, qui s'étend à partir de ladite chambre (44), ladite conduite d'aspiration pouvant être menée de préférence, via une tubulure de passage (46), hors du bâti de machine de type boîtier, et, de préférence, ladite paroi verticale (38) du cadre pivotant (12) étant pourvu, du côté éloigné de l'outil, d'un nervurage (39) délimité par une bride de bord circonférentielle, qui forme deux chambres (40) flanquant l'évidement de passage (24) et s'étendant sur la hauteur de la paroi (38) et auxquelles est associée respectivement une tige de guidage (23) pour le guidage de la console porte-outil (11), ladite tige de guidage étant fixée par ses extrémités sur ladite bride de bord.

6. Machine à travailler le bois selon l'une quelconque des revendications précédentes, **caractérisée par le fait que** les blocs-supports (14) recevant le cadre pivotant (12) sont pourvus d'une rainure en segment (15) dans laquelle s'engagent, à la manière de languette et rainure, des languettes de support (13) en forme de segment montées sur le cadre pivotant (12).

7. Machine à travailler le bois selon l'une quelconque des revendications précédentes, **caractérisée par le fait que** ladite console porte-outil (11) est réalisée en tant que pièce moulée qui comprend une paroi verticale (49) qui est pourvue, d'un côté, de saillies (41) contenant les douilles de guidage (25) et d'un dispositif de logement (50) associé à l'arbre (8) portant ledit outil d'usinage (5), ainsi que, de l'autre côté, d'une saillie (30) contenant ledit écrou (27) qui agit de concert avec la broche filetée associée, de préférence la paroi (49) de ladite console porte-outil (11) étant pourvue, sur le côté montrant dans la direction opposée au cadre pivotant (12), d'un nervurage sur lequel est monté de manière réglable une plaque de support (51) qui porte le moteur (9), et que ledit arbre (8) portant l'outil d'usinage (5) et logé sur la console porte-outil (11) est relié à entraînement, via une transmission primaire (10), au moteur (9) associé apte à être monté de manière réglable sur la console porte-outil (11).

8. Machine à travailler le bois selon l'une quelconque des revendications précédentes, **caractérisée par le fait que** ledit cadre pivotant (12) est pourvu d'un dispositif de réception pour rapporter un ensemble à faire une entaille préliminaire (53) qui comprend un outil à faire une entaille préliminaire (52) entraînable au moyen d'un moteur (54) et aligné avec ledit outil d'usinage (5) de la console porte-outil (11).

9. Machine à travailler le bois selon la revendication 8, **caractérisée par le fait que** ledit ensemble à faire une entaille préliminaire (53) présente une plaque à rapporter (58) qui peut être montée, de préférence de manière réglable, sur des projections épaissies de vissage (57) du cadre pivotant (12) et sur laquelle sont reçus le moteur (54) d'un côté et un bloc-support (60) de l'autre côté qui reçoit un bloc de réglage (61), de préférence de manière à être réglable en hauteur, lequel comprend ledit outil à faire une entaille préliminaire (52) et reçoit l'arbre (56) de l'outil à faire une entaille préliminaire (52) de manière à être axialement réglable et lequel, de préférence, est pourvu de vis de réglage (63) qui sont accessibles d'en haut par des trous associés (64) ménagés dans la planche de table (2) et/ou dans ledit cadre pivotant (12).

10. Machine à travailler le bois selon l'une quelconque des revendications précédentes, **caractérisée par le fait que** l'on prévoit un dispositif indicateur d'angle et un dispositif indicateur de hauteur qui sont constitués chacun par une aiguille (68 ou bien 71) et par une échelle (66 ou bien 70), respectivement un organe étant fixé au niveau d'une fenêtre associée (67 ou bien 69) de la paroi du bâti de machine (1) qui est située du côté de manoeuvre et l'autre organe respectif du dispositif indicateur d'angle étant fixé sur le cadre pivotant (12) et celui du dispositif indicateur de hauteur sur la console porte-outil (11).
